(19) Europäisches Patentamt
European Patent Office
Office européen des brevets

(11) **EP 2 621 720 B1**

(12) **EUROPEAN PATENT SPECIFICATION**

(45) Date of publication and mention
of the grant of the patent:
**19.12.2018 Bulletin 2018/51**

(21) Application number: **11832953.1**

(22) Date of filing: **16.09.2011**

(51) Int Cl.:
**B60C 1/00** *(2006.01)*     **C08K 5/3415** *(2006.01)*
**C08K 5/54** *(2006.01)*

(86) International application number:
**PCT/US2011/051902**

(87) International publication number:
**WO 2012/050732 (19.04.2012 Gazette 2012/16)**

(54) **BARRIER LAYER FOR INFLATABLE ARTICLES**

BARRIERESCHICHT FÜR AUFBLASBARE ARTIKEL

COUCHE BARRIÈRE POUR ARTICLES GONFLABLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2010 PCT/US2010/051002**

(43) Date of publication of application:
**07.08.2013 Bulletin 2013/32**

(73) Proprietor: **Compagnie Générale des
Etablissements Michelin
63000 Clermont-Ferrand (FR)**

(72) Inventor: **BERGMAN, Brian, R.
Simpsonville
SC 29680 (US)**

(74) Representative: **Dossmann, Gérard et al
Casalonga & Partners
Bayerstrasse 71-73
80335 München (DE)**

(56) References cited:
**EP-A1- 1 818 187      EP-A1- 2 036 743
WO-A1-2010/044776      US-A1- 2006 100 339
US-A1- 2009 308 517      US-A1- 2009 308 517
US-A1- 2010 022 699      US-A1- 2010 210 779**

**Description**

BACKGROUND OF THE INVENTION

Field of the Invention

This invention relates generally to gas-inflated articles and more specifically, to barrier layers within the inflated articles that decrease the diffusion of the gas from the article.

Description of the Related Art

Various articles such as tires are constructed to hold air or other gas under pressure. Often these articles are made from a polymeric material having some elastic properties but typically also remain slightly permeable to gases. If left unchecked, the gas permeability of the inflated article will cause the article to deflate over time.

It is therefore often advantageous for inflatable articles to contain a barrier layer that reduces gas permeability and inhibits oxygen travel through the article. For tires, the barrier layer if often an inner tube or an innerliner made of a material that better retains the inflation gas. Rubbery copolymers containing a majority of isobutylene units, such as butyl rubbers, are well known for their ability to retain inflation gas over other materials and are therefore particularly desired for use as inner tubes and tire innerliners. However, the tire industry still strives to find materials having improved properties for the manufacture of inner tubes and innerliners.

SUMMARY OF THE INVENTION

The present invention provides a barrier layer according to the present claims; in particular, the barrier layer being for an inflatable article. Particular embodiments include a barrier layer for impeding the flow of inflation gas through an inflatable article, the barrier layer constructed of a rubber composition that is based upon a cross-linkable elastomer composition, the cross-linkable rubber composition comprising, per 100 parts by weight of rubber (phr) at least 50 phr of a primary elastomer selected from at least one of a halogenated butyl rubber or a polymeric halogenated rubber comprising $C_4$ to $C_7$ isoolefin derived units, para-alkylstyrene derived units and para-(haloalkylstyrene) derived units. The rubber composition may further include between 0 phr and 50 phr of a secondary diene elastomer.

Additionally the rubber composition includes a platy filler and 1,3-phenylene dimaleimide and is cured with a sulfur curing system. The amount of 1,3-phenylene dimaleimide added to the elastomer composition is sufficient to significantly reduce the permeability of the rubber composition.

Particular embodiments include a pneumatic tire comprising a barrier layer for impeding the flow of inflation gas through the pneumatic tire, the barrier layer constructed of a rubber composition that is based upon a cross-linkable elastomer composition, the cross-linkable rubber composition comprising, per 100 parts by weight of rubber (phr) at least 50 phr of a polymeric halogenated rubber comprising $C_4$ to $C_7$ isoolefin derived units, para-alkylstyrene derived units and para-(haloalkylstyrene) derived units.

Additionally the rubber composition may include between 0 phr and 50 phr of a secondary diene elastomer, a platy filler, 1,3-phenylene dimaleimide and a sulfur cure system.

Particular embodiments include the barrier layer described above wherein the 1,3-phenylene dimaleimide added in an amount sufficient to provide the rubber composition with at least a 5 percent reduction in permeability measured in accordance with ASTM D3985 at 40° C over a second rubber composition identical to the rubber composition but for the second rubber composition's 1,3-phenylene dimaleimide content.

The foregoing and other objects, features and advantages of the invention will be apparent from the following more detailed descriptions of particular embodiments of the invention.

BRIEF DESCRIPTION OF THE DRAWINGS

   FIG. **1** is a graph showing the viscosity response over time for various rubber formulations having no platy filler.
   FIG. **2** is a graph showing the viscosity response over time for various rubber formulations having a platy filler.

DETAILED DESCRIPTION OF PARTICULAR EMBODIMENTS

Particular embodiments of the present invention include barrier layers such as innerliners and/or inner tubes for tires and other inflatable articles. Other embodiments include the inflatable articles themselves, the rubber compositions making the barrier layers and their methods of manufacture. In an embodiment, the barrier layers are manufactured from rubber compositions that include a halogenated rubber, a platy filler and 1,3-phenylene dimaleimide (BMI). The addition of the BMI to the rubber composition surprisingly reduces the permeability of the barrier layers by a significant amount, *i.e.,* significantly reduces the amount of inflation gas that passes through the barrier layer over a period of time.

When incorporated into the wall of an elastomeric article, a barrier layer reduces the gas, vapor, and/or chemical permeability of the article and thereby not only improves the performance of the article by inhibiting gases from leaking out of the article, but may also protect the article from other damage, *e.g.,* oxidation due to oxygen migration.

As used herein, "polymer" may be used to refer to homopolymers, copolymers, interpolymers, terpolymers, etc. Likewise, a copolymer may refer to a polymer comprising at least two monomers, optionally with other monomers.

As used herein, when a polymer is referred to as comprising a monomer, the monomer is present in the polymer in the polymerized form of the monomer or in the derivative form the monomer. Likewise, when a functionalized polymer is described with reference to the component used to functionalize the polymer or a particular derivative form, it is understood that functionalizing component is present in the form of the functional group actually derived from that component. For example, the product of functionalization of brominated poly(isobutylene-co-p-methylstyrene) (BIMS) with triethylamine may be referred to as triethylamine functionalized BIMS, triethylammonium-BIMS (TEA-BIMS) or a similar expression, it being understood that the pendant functional group may comprise triethylammonium ion, triethylammonium salt, or another derivative.

As used herein, "elastomer" or "elastomeric composition" refers to any polymer or composition of polymers (such as blends of polymers) consistent with the ASTM D1566 definition. The terms may be used interchangeably with the term "rubber."

As used herein, "phr" is 'parts per hundred rubber' and is a measure common in the art wherein components of a composition are measured relative to a major elastomer component, based upon 100 parts by weight of the elastomer(s) or rubber(s).

As used herein, "isobutylene based elastomer" or "isobutylene based polymer" refers to elastomers or polymers comprising at least 70 mole percent repeat units from isobutylene.

As used herein, "based upon" is a term that recognizes embodiments of the present invention are made of vulcanized or cured rubber compositions that were, at the time of their assembly, uncured. The cured rubber composition is therefore "based upon" the uncured rubber composition. In other words, the cross-linked rubber composition is based upon the cross-linkable rubber composition.

The rubber compositions disclosed herein that are useful for barrier layers include elastomers that improve the impermeability of the barrier layer. An embodiment of the barrier layer of the present invention includes a halogenated rubber and may optionally further include a secondary rubber that is a diene rubber.

More particularly, embodiments of such barrier layers include a primary elastomer in a majority amount (at least 50 phr) that is either 1) a polymeric halogenated rubber comprising $C_4$ to $C_7$ isoolefin derived units, para-alkylstyrene derived units and para-(haloalkylstyrene) derived units; 2) a halogenated butyl rubber; or 3) combinations thereof.

Further describing the polymeric halogenated rubber comprising $C_4$ to $C_7$ isoolefin derived units, para-alkylstyrene derived units and para-(haloalkylstyrene) derived units, the isoolefin may be a $C_4$ to $C_7$ compound, in an embodiment selected from isobutylene, isobutene, 2-methyl-1-butene, 3-methyl-1-butene, 2-methyl-2-butene, 4-methyl-1-pentene and the like. The elastomer may also include other monomer derived units. In an embodiment, the isoolefin is isobutylene.

The polymeric halogenated rubber can further include at least one styrenic monomer, which may be any substituted styrene monomer unit. In particular embodiments, the substituted styrene monomer unit can be selected from para-alkylstyrenes, wherein the alkyl can be selected from any $C_1$ to $C_5$, alternatively $C_4$ to $C_5$, alkyl or branched chain alkyl. In an embodiment, the styrenic monomer can be p-methylstyrene (PMS).

In an embodiment, the polymeric halogenated rubber can include at least one multi-olefin, which may be a $C_4$ to $C_{14}$ diene, conjugated or not, selected, for example, from isoprene, butadiene, 2,3-dimethyl-1,3-butadiene, myrcene, 6,6-dimethyl-fulvene, hexadiene, cyclopentadiene, methylcyclopentadiene, piperylene and the like.

In particular embodiments, the polymeric halogenated rubber can be halogenated with chlorine or bromine on the alkyl substituent of the styrenic derived units of the polymer. In an embodiment, the polymeric halogenated rubber is a halogenated poly(isobutylene-co-p-methylstyrene) (PIMS), halogenated with at least one of chlorine and bromine. One example is of the terpolymer of isobutylene, para-methylstyrene and brominated para-methylstyrene, wherein a portion of the para-methylstyrene substituents were brominated (BIMS), *i.e.,* brominated PIMS.

In an embodiment, the isobutylene and para-methyl styrene polymers may contain between 0.5 and 20 mole percent para-methylstyrene, wherein up to 60 mole percent of the methyl substituent groups on the para-methylstyrene units contain a halogen, e.g., p-bromomethylstyrene.

In an embodiment, the halogenated polymeric halogenated rubber may further be functionalized as known to one having ordinary skill in the art. Such functionalized polymers are known to include a functional substituent pendant to the polymer. An example of such functionalization is the functionalization of BIMS with triethylamine groups as disclosed in U.S. Patent Application No. 2010/0210779, which is hereby fully incorporated by reference. Such functionalization results in triethylammonium-BIMS (TEA-BIMS).

The halogenated polymeric elastomers comprising $C_4$ to $C_7$ isoolefin derived units, para-alkylstyrene derived units and para-(haloalkylstyrene) derived units are available as EXXPRO Elastomers from ExxonMobil Chemical Company, Houston, Texas.

In particular embodiments, the primary elastomer included in the rubber composition useful for barrier layers can include a halogenated butyl rubber. As known in the art, butyl rubber is a copolymer of isobutylene with small amounts of isoprene. Typically butyl rubber comprises more than 90 mole percent of isobutylene derived units and less than 10 mole percent of isoprene derived units. Both bromobutyl rubber and chlorobutyl rubber are known to one having ordinary skill in the art and are produced by reacting chlorine or bromine with butyl rubber in a continuous process. Bromobutyl and chlorobutyl rubbers are available, for example, from Lanxess with offices in Fairlawn, Ohio.

An embodiment of the rubber composition useful for barrier layers includes the primary elastomer in an amount that is sufficient to provide the physical characteristics desired for the barrier layer. As noted above, the primary elastomer is either 1) a polymeric halogenated rubber comprising $C_4$ to $C_7$ isoolefin derived units, para-alkylstyrene derived units and para-(haloalkylstyrene) derived units; 2) a halogenated butyl rubber; or 3) combinations thereof. In an embodiment, the rubber composition can include between 50 phr and 100 phr of the primary elastomer or alternatively between 70 phr and 100 phr, between 75 phr and 100 phr, between 95 phr and 100 phr or 100 phr of the primary elastomer.

In addition to the primary elastomer, particular embodiments of the rubber composition can include a secondary diene elastomer. To further explain, in general, diene elastomers or rubber are those elastomers resulting at least in part (*i.e.,* a homopolymer or a copolymer) from diene monomers (monomers bearing two double carbon-carbon bonds, whether conjugated or not). Essentially unsaturated diene elastomers are understood to mean those diene elastomers that result at least in part from conjugated diene monomers, having a content of members or units of diene origin (conjugated dienes) that are greater than 15 mol.%.

Thus, for example, diene elastomers such as butyl rubbers, nitrile rubbers or copolymers of dienes and of alpha-olefins of the ethylene-propylene diene terpolymer (EPDM) type or the ethylene-vinyl acetate copolymer type do not fall within the preceding definition of essentially unsaturated diene elastomers, and may in particular be described as "essentially saturated" diene elastomers (low or very low content of units of diene origin, *i.e.,* less than 15 mol. %).

Within the category of essentially unsaturated diene elastomers are the highly unsaturated diene elastomers, which are understood to mean in particular diene elastomers having a content of units of diene origin (conjugated dienes) that is greater than 50 mol.%. Examples of highly unsaturated elastomers include polybutadienes (BR), polyisoprenes (IR), natural rubber (NR), butadiene copolymers, isoprene copolymers and mixtures of these elastomers. The polyisoprenes include, for example, synthetic cis-1,4 polyisoprene, which may be characterized as possessing cis-1,4 bonds of more than 90 mol. % or alternatively, of more than 98 mol. %.

Other examples of highly unsaturated dienes include styrene-butadiene copolymers (SBR), butadiene-isoprene copolymers (BIR), isoprene-styrene copolymers (SIR) and isoprene-butadiene-styrene copolymers (SBIR) and mixtures thereof.

It should be noted that in an embodiment, any of the diene elastomers and especially the highly unsaturated elastomers optionally may be utilized as a secondary elastomer that has been functionalized. These elastomers can be functionalized by reacting them with suitable functionalizing agents prior to or in lieu of terminating the elastomer. Exemplary functionalizing agents include, but are not limited to, metal halides, metalloid halides, alkoxysilanes, imine-containing compounds, esters, ester-carboxylate metal complexes, alkyl ester carboxylate metal complexes, aldehydes or ketones, amides, isocyanates, isothiocyanates, imines, and epoxides. These types of functionalized elastomers are known to those of ordinary skill in the art. While particular embodiments of the rubber composition may include one or more secondary diene elastomers that have all been functionalized, other embodiments may include one or more of these functionalized elastomers mixed with one or more of the non-functionalized secondary diene elastomers.

A non-exhaustive list of secondary diene elastomers that may be used in an embodiment includes natural rubber, polybutadiene rubber, nitrile rubber, polyisoprene rubber, poly(styrene-co-butadiene) rubber, poly(isoprene-co-butadiene) rubber, styrene-isoprene-butadiene rubber, ethylene-propylene rubber, halogenated isoprene, halogenated isobutylene copolymers, polychloroprene, star-branched polyisobutylene rubber and mixtures thereof.

As noted above, a diene elastomer is defined as being a highly unsaturated diene elastomer, an essentially unsaturated diene elastomer or an essentially saturated diene elastomer. In an embodiment, the secondary diene elastomer may be selected from a highly unsaturated diene elastomer, an essentially unsaturated diene elastomer, an essentially saturated diene elastomer or combinations thereof. In an embodiment, the secondary diene elastomer is natural rubber.

Particular embodiments of the rubber composition disclosed herein that are useful for barrier layers include the secondary diene elastomer in an amount that is sufficient to provide the physical characteristics desired for the barrier layer. The rubber composition can include the secondary diene elastomer in an amount of between 0 phr and 50 phr or alternatively between 0 phr and 30 phr, between 0 phr and 25 phr, between 0 phr and 5 phr or none of the secondary diene elastomer.

Particular embodiments of the rubber compositions disclosed herein that are useful as barrier layers may also include one or more filler components such as calcium carbonate, clay, mica, silica and silicates, talc, titanium dioxide, and carbon black. Such fillers may include permeability reducing mineral fillers that are capable of reducing the gas permeability characteristics of a barrier layer formed from the composition and are, thanks to their form, size or shape factor, generally known as "platy fillers" (*i.e.,* under the form of plates, platelets, layers, stacked layers or platelets, etc.).

Examples of platy fillers include silicates, such as phyllosilicates, smectite and vermiculite clay minerals and various other clay materials. Particular examples include kaolin, montmorillonite such as sodium montmorillonite, magnesium montmorillonite, and calcium montmorillonite, nontronite, beidellite, volkonskoite, hectorite, laponite, sauconite, sobockite, stevensite, svinfordite, vermiculite, mica, bentonite, sepeolite, saponite, and the like. Other materials that may be used include micaceous minerals such as illite and mixed layered illite/smectite minerals, such as ledikite and admixtures of illites and the clay minerals described above. Many of these and other layered clays generally comprise particles containing a plurality of silicate platelets having a thickness of 8-12 Å tightly bound together at interlayer spacings of 4 A or less, and contain exchangeable cations such as $Na^+$, $Ca^{+2}$, $K^+$ or $Mg^{+2}$ present at the interlayer surfaces.

The layered platy fillers, such as clay, can be exfoliated by suspending the platy filler in a water solution. As used herein, "exfoliation" refers to the separation of individual layers of the original inorganic particle, so that polymer can surround or surrounds each particle. In an embodiment, sufficient polymer is present between each platelet such that the platelets are randomly spaced. For example, some indication of exfoliation or intercalation may be a plot showing no X-ray lines or larger d-spacing because of the random spacing or increased separation of layered platelets. However, as recognized in the industry and by academia, other indicia may be useful to indicate the results of exfoliation such as permeability testing, electron microscopy and atomic force microscopy.

Preferably, when exfoliating the layered clays, the concentration of clay in water is sufficiently low to minimize the interaction between clay particles and to fully exfoliate the clay. In one embodiment, the aqueous slurry of clay can have a clay concentration of between 0.1 and 5.0 weight percent or alternatively, between 0.1 and 3.0 weight percent. Organoclays can be obtained by using an organic exfoliating agent such as, for example, tertiary amines, diamines, polyamines, amine salts, as well as quaternary ammonium compounds. Exemplary organoclays are available commercially from Southern Clay Products under the trade names CLOISITE 6A, 15A, and 20A, which are natural montmorillonite clays modified with quaternary ammonium salts. CLOISITE 6A, for example, contains 140 meq/100 g clay of dimethyl dihydrogenated tallow quaternary ammonium salts.

In addition to dimethyl-dihydrogenated tallow-quaternary ammonium salts, clays may also be organically modified, for example, with an octadecylamine or a methyl-tallow-bis-2-hydroxyethyl quaternary ammonium salt. Still other examples of useful surfactants that may be used to modify the particles include dimethyl ditallow ammonium, dipolyoxyethylene alkyl methyl ammonium, trioctyl methyl ammonium, polyoxypropylene methyl diethyl ammonium, dimethyl benzyl hydrogenated tallow quaternary ammonium, dimethyl hydrogenated tallow 2-ethylhexyl quaternary ammonium, methyl dihydrogenated tallow ammonium, and the like.

Particular embodiments of the rubber composition disclosed herein that are useful for barrier layers include platy fillers such as clay or exfoliated clay that have been organically modified, those that have not been organically modified and combinations thereof. The amount of platy filler incorporated into the rubber composition in accordance with this invention depends generally on the particular particles selected and the materials with which they are mixed. Generally an amount is added that is sufficient to develop an improvement in the mechanical properties or barrier properties of the rubber composition, e.g., tensile strength or oxygen permeability.

For example, the platy fillers may be present in the composition in an amount of between about 1 phr and about 30 phr, between about 1 phr and 25 phr or between about 1 phr and about 15 phr. In other embodiments, the fillers may be present in amount of between about 3 phr and about 10 phr, between about 2 phr and about 8 phr, or between about 3 phr and about 7 phr. Such amounts may include just the organically modified filler (such as an organoclay), just the non-organically modified filler or mixtures thereof.

In addition to the platy fillers, carbon black and/or silica may also be incorporated into particular embodiments of the rubber composition disclosed herein in quantities sufficient to provide the desired physical properties of the material, *e.g.,* modulus and cohesion. In an embodiment, the silica is a highly dispersible precipitated silica but other silicas may also be used in other embodiments. Such amounts may include, for example, between 10 phr and 150 phr of carbon black and/or silica or alternatively, between 5 phr and 100 phr or between 30 phr and 70 phr of carbon black and/or silica.

Non-limiting examples of useful carbon blacks may include N550, N650, N660, N762, N772 and N990. Non-limiting examples of useful silica include Perkasil KS 430 from Akzo, the silica BV3380 from Degussa, the silicas Zeosil 1165 MP and 1115 MP from Rhodia, the silica Hi-Sil 2000 from PPG and the silicas Zeopol 8741 or 8745 from Huber.

Embodiments of the rubber composition disclosed herein further includes the addition of 1,3-phenylene dimaleimide (BMI). The interaction between the primary elastomer, the BMI and the platy filler appears to provide a barrier layer with significantly improved impermeability properties. In the examples that follow, rubber compositions containing the BMI in the suitable quantity had a surprising improvement in their measured permeability rating by between about 7 % and about 13 %. An embodiment includes adding the BMI to the rubber composition in an amount of at least 0.25 phr, at least 0.5 phr or between 0.25 phr and 5 phr or alternatively between 0.1 phr and 5 phr, between 0.1 phr and 3 phr, between 0.25 phr and 3 phr, between 0.25 phr and 2 phr or between 0.25 phr and 1.5 phr.

It may be noted that BMI is sometimes used as an accelerator in rubber compositions. Accelerators increase the rate of vulcanization during the curing process and are well known and typically used in the manufacture and curing of rubber articles. BMI is especially known and useful as a curing agent in peroxide curing systems, *i.e.,* in those curing systems that utilize peroxide as a curing agent rather than the more common use of sulfur.

As noted above, the surprising result of the decreased permeability of the disclosed barrier layer is achieved by the addition of the BMI and the platy filler to the rubber composition forming the barrier layer. While not limiting the invention but by way of explanation, it is believed that the BMI interacts with the platy filler to provide the decreased permeability. In that manner, the BMI is not available to act as a curing accelerator during the vulcanization process. These concepts are illustrated in the examples appearing below.

Particular embodiments of the present invention provide a rubber composition and a barrier layer made therefrom having at least a 5 percent reduction in permeability over other rubber compositions that are identical except for their lack of BMI content. Alternatively the reduction in permeability may be at least 7 percent, at least 10 percent, between 5 percent and 15 percent or between 7 percent and 15 percent. Such measurements are made in accordance with ASTM D3985.

The rubber compositions disclosed herein can be cured with a sulfur curing system that typically includes sulfur and an accelerator. Suitable free sulfur includes, for example, pulverized sulfur, rubber maker's sulfur, commercial sulfur, and insoluble sulfur. The amount of free sulfur included in the rubber composition may range between 0.5 and 3 phr or alternatively between 0.8 and 2.5 phr or between 1 and 2 phr.

Use may be made of any compound capable of acting as curing accelerator in the presence of sulfur, in particular those chosen from the group consisting of 2-2'-dithio bis(benzothiazole) (MTBS), diphenyl guanidine (DPG), N-cyclohexyl-2-benzothiazole-sulphenamide (CBS), N,N-dicyclohexyl-2-benzothiazolesulphenamide (DCBS), N-tert-butyl-2-benzo-thiazole-sulphenamide (TBBS), N-tert-butyl-2-benzothiazolesulphen-imide (TBSI) and the mixtures of these compounds.

Other additives can be added to the rubber composition disclosed herein as known in the art. Such additives may include, for example, some or all of the following: antidegradants, antioxidants, fatty acids, pigments, waxes, stearic acid, zinc oxide and other accelerators. Examples of antidegradants and antioxidants include 6PPD, 77PD, IPPD and TMQ and may be added to rubber compositions in an amount of from 0.5 phr and 5 phr. Zinc oxide may be added in an amount of between 1 phr and 6 phr, 1 phr and 4 phr or between 1 phr and 3 phr. It may be noted that the small amounts of activators such as metallic oxides (such as zinc oxide) or peroxide (such as dicumyl peroxide at < 0.1 phr) can help the interaction between the primary elastomer and the BMI. Tackifying resins (such as octylphenol formaldehyde resin) can also be included in the rubber composition.

Barrier layers made according to the present invention may be incorporated into numerous articles. An embodiment includes an article having the barrier layer constructed of the rubber composition disclosed herein. For example, in one embodiment, barrier layers made according to the present invention may be incorporated into elastomeric articles that are intended to be inflated with a gas. In these applications, the barrier layer inhibits gas flow through the wall of the article. Particular examples of articles that may incorporate a barrier layer according to the present invention include sports balls such as footballs, basketballs, and the like, flotation devices such as inflatable boats, air mattresses, and the like. Tires also have a need for barrier layers to protect the tires from deflating quickly over time or from damage to the tire internals from oxidation caused by oxygen migrating through the tire from the interior of the tire.

While the barrier layer is typically on the interior wall of the inflated chamber of the article or alternatively made of an inner tube, the barrier layer may also be placed further within the wall of the article. For example, while a tire typically includes a barrier layer disposed on the inner wall of the tire, a barrier layer may also be included within the wall of the tire carcass. Barrier layers for tires as disclosed herein can be used for all types of tires including truck tires, aircraft tires, passenger tires and light truck tires.

The rubber compositions of particular embodiments may be processed in a suitable mixing device such as a BANBURY mixer under conditions of shear sufficient to allow the components to become uniformly dispersed. In a two-step process, often called a nonproductive mixing stage, the elastomers are first masticated to increase their temperature and then the BMI and any other components are added, other than the cure package. The rubber composition is continued to be mixed until a temperature of between 140 °C and 180 °C is reached. The mix is then dropped and cooled.

In a second step, often called a productive mixing stage, the mix is processed on a mill to mix the cure package into the rubber composition. The BMI is added to the mix in the nonproductive stage so that the BMI has an opportunity to act as a barrier property improvement agent rather than as an accelerator. While the cure package typically includes one or more accelerators, sulfur, zinc oxide and stearic acid, it is thought that the zinc oxide and stearic acid may be optionally added to the mix during the nonproductive stage.

The resulting rubber composition may be formed, for example by being extruded, compression molded, blow molded or injection molded into various shaped articles including innerliners and inner tubes for inflatable articles.

The invention is further illustrated by the following examples, which are to be regarded only as illustrations and not delimitative of the invention in any way. The properties of the compositions disclosed in the examples were evaluated as described below and the methods described below are suitable for measuring any such properties claimed in particular embodiments of the invention.

Moduli of elongation (MPa) were measured at 10% (MA10), 100% (MA 100) and at 300% (MA300) at a temperature of 23 °C based on ASTM Standard D412 on dumb bell test pieces. The measurement were taken in the second elongation; *i.e.,* after an accommodation cycle. These measurements are secant moduli in MPa, based on the original cross section of the test piece.

Hysteresis losses (HL) were measured in percent by rebound at 60 °C at the sixth impact in accordance with the following equation:

$$HL\ (\%) = 100\ (W_0 - W_1)/W_1,$$

where $W_0$ is the energy supplied and $W_1$ is the energy restored.

Oxygen permeability (mm cc) / ($m^2$ day) was measured using a MOCON OX-TRAN 2/60 permeability tester at 40°C in accordance with ASTM D3985. Cured sample disks of measured thickness (approximately 0.8-1.0 mm) were mounted on the instrument and sealed with vacuum grease. Nitrogen (with 2% $H_2$) flow was established at 10 cc/min on one side of the disk and oxygen (10% $O_2$, remaining $N_2$) flow was established at 20 cc/min on the other side. Using a Coulox oxygen detector on the nitrogen side, the increase in oxygen concentration was monitored. The time required for oxygen to permeate through the disk and for the oxygen concentration on the nitrogen side to reach a constant value, was recorded along with the barometric pressure and used to determine the oxygen permeability, which is the product of the oxygen permeance and the thickness of the sample disk in accordance with ASTM D3985.

Mooney Plasticity ML (1+4): Mooney Plasticity was measured in accordance with ASTM Standard D1646-04. In general, the composition in an uncured state is molded in a cylindrical enclosure and heated to 100 °C. After 1 minute of preheating, the rotor turns within the test sample at 2 rpm, and the torque used for maintaining this movement is measured after 4 minutes of rotation. The Mooney Plasticity is expressed in "Mooney units" (MU, with 1 MU = 0.83 Newton-meter).

Example 1

This example demonstrates that the addition of the BMI surprisingly reduces the permeability of a barrier layer by a significant amount, *i.e.,* effectively reducing the amount of inflation gas that may pass through the barrier layer over a period of time.

Using the two step process described above, elastomer formulations **F1-F10** were prepared using the components shown in Table **1.** The amount of each component making up the elastomer formulations **F1-F10** are provided in Table **1** in parts per hundred parts by weight (phr) of the elastomer. Testing plaques were cut from each of the formulations and cured at 150 °C for 60 minutes.

The first five formulations, **F1** through **F5,** included no platy filler. Formulations **F1** and **F6** included no BMI. Formulations **F2** through **F5** and **F7** through **F10** had varying levels of BMI.

Table **1** - Rubber Formulations (phr)

| Elastomer Composition | F1 | F2 | F3 | F4 | F5 | F6 | F7 | F8 | F9 | F10 |
|---|---|---|---|---|---|---|---|---|---|---|
| Elastomer (BIMS) | 100 | 100 | 100 | 100 | 100 | 100 | 100 | 100 | 100 | 100 |
| Carbon Black N772 | 51 | 51 | 51 | 51 | 51 | 51 | 51 | 51 | 51 | 51 |
| BM1 | 0 | 0.25 | 0.5 | 1 | 2 | 0 | 0.25 | 0.5 | 1 | 2 |
| Platy Filler | | | | | | 5 | 5 | 5 | 5 | 5 |
| Tackifier Resin | 2.5 | 2.5 | 2.5 | 2.5 | 2.5 | 2.5 | 2.5 | 2.5 | 2.5 | 2.5 |
| Cure Package | 5.7 | 5.7 | 5.7 | 5.7 | 5.7 | 5.7 | 5.7 | 5.7 | 5.7 | 5.7 |

The BIMS elastomer was EXXPRO MDX 01-05 from ExxonMobil Chemical Company. The BMI was 1,3-phenylene dimaleimide. The tackifier resin was octylphenol formaldehyde resin. The platy filler was an organically modified montmorillonite clay, CLOISITE 6A, modified with 140 meq/100 g clay of dimethyl dihydrogenated tallow quaternary ammonium salts. The cure package included sulfur, accelerator (MBTS), zinc oxide and stearic acid.

The cured testing plaques were tested as described above to measure their physical properties. The measured physical properties for the plaques obtained from each of the formulations **F1** through **F10** are shown in Table **2**. The percent improvement in oxygen permeability shown in Table **2** for formulations **F2-F5** is the improvement of each formulation over formulation **F1** while the percent improvement for formulations **F7-F10** is the improvement of each formulation over formulation **F6**.

Table **2** - Physical Properties of the Rubber Formulations

| Elastomer Composition | F1 | F2 | F3 | F4 | F5 | F6 | F7 | F8 | F9 | F10 |
|---|---|---|---|---|---|---|---|---|---|---|
| Mooney ML(1+4) | 80 | 80 | 81 | 82 | 83 | 52 | 55 | 54 | 60 | 61 |
| MA10, MPa | 2.6 | 2.6 | 2.7 | 2.7 | 2.7 | 3.0 | 3.2 | 3.4 | 3.4 | 3.7 |
| MA100, MPa | 1.18 | 1.12 | 1.18 | 1.14 | 1.12 | 1.22 | 1.41 | 1.60 | 1.57 | 1.73 |
| MA300, MPa | 1.46 | 1.37 | 1.39 | 1.39 | 1.33 | 1.33 | 1.54 | 1.73 | 1.72 | 1.89 |
| Hysteresis Loss (%) | 27.9 | 28.1 | 28.9 | 28.9 | 29.4 | 35.1 | 32.7 | 30.9 | 31.2 | 30.2 |
| Oxygen Permeability, (mm cc) / (m$^2$ day) | 115 | 112.5 | 110.9 | 115.2 | 112.1 | 103.3 | 89.0 | 95.1 | 93.7 | 91.2 |
| % Improvement | base | 2.6 | 4.3 | 0 | 2.6 | base | 13.8 | 7.8 | 9.3 | 11.7 |

In formulations **F2-F4**, there was little change in the uncured properties with the addition of the BMI. The Mooney viscosity was relatively unchanged with the increased BMI loadings.

In formulations **F7-F10**, there was a significant change in uncured properties with the addition of the platy filler and the BMI. A decrease in Mooney viscosity was observed with the addition of the platy filler (*i.e.,* **F1** compared to **F6**) but with the addition of the BMI with the platy filler, a significant increase in Mooney viscosity was observed.

In formulations **F2-F4,** there was little change in cured properties with the addition of the BMI. The small change in the percent improvement of oxygen permeability is with the range of the error of the instrument, *i.e.,* 3 %.

In formulations **F7-F10,** a surprising decrease in hysteresis was observed with the addition of the BMI. Also, the percent improvement in the oxygen permeability was surprising.

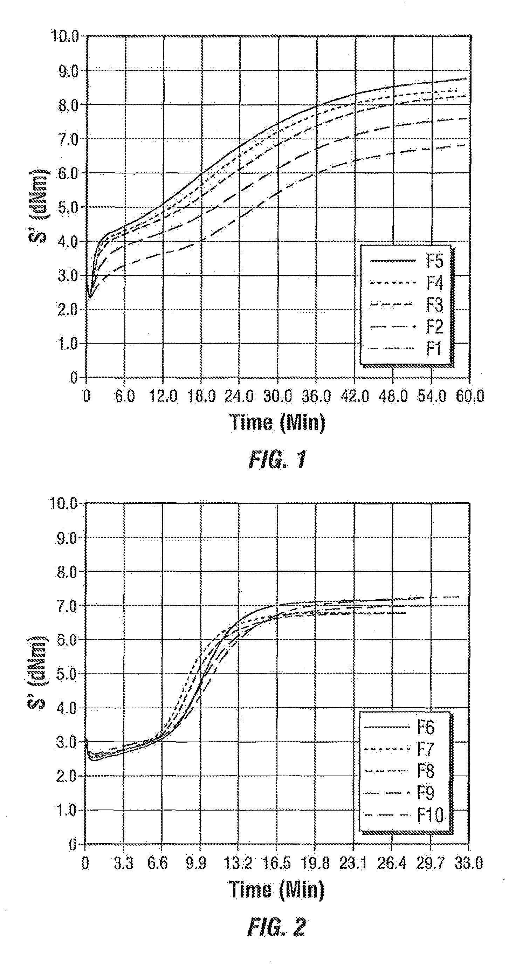

FIGS. **1** and **2** are graphs showing the viscosity response over time for the rubber formulations **F1-F10.** As can be seen in FIG. **1** showing the viscosity response for rubber formulations **F1-F5,** the viscosity increases more rapidly for each of the formulations as the amount of the BMI is increased indicating that there is some accelerator activity being contributed by the BMI in these formulations. However, as can be seen in FIG. 2 showing the viscosity response for rubber formulations **F6-F10** that include the platy filler, the addition of the BMI has no noticeable accelerant effect on the vulcanization, thereby demonstrating that the BMI is not accelerating the vulcanization process but is, as the results show in Table **2,** significantly improving the barrier properties of the rubber formulations.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

It should be understood from the foregoing description that various modifications and changes may be made to the embodiments of the present invention without departing from its true spirit. The foregoing description is provided for the purpose of illustration only and should not be construed in a limiting sense. Only the language of the following claims should limit the scope of this invention.

**Claims**

1. A barrier layer for impeding the flow of inflation gas through an inflatable article, the barrier layer constructed of a rubber composition that is based upon a cross-linkable elastomer composition, the cross-linkable elastomer composition comprising, per 100 parts by weight of rubber (phr):

at least 50 phr of a primary elastomer selected from at least one of a halogenated butyl rubber or a polymeric halogenated rubber comprising $C_4$ to $C_7$ isoolefin derived units, para-alkylstyrene derived units and para-(haloalkylstyrene) derived units;
between 0 phr and 50 phr of a secondary diene elastomer;
a platy filler;
at least 0.1 phr of 1,3-phenylene dimaleimide added to the cross-linkable elastomer composition in the nonproductive stage of the processing of the rubber composition; and
a sulfur cure system having sulfur and an accelerator,

wherein the 1,3-phenylene dimaleimide is not included in the sulfur cure system.

2. The barrier layer of claim 1, wherein the rubber composition provides at least a 5 percent reduction in permeability as measured in accordance with ASTM D3985 at 40° C over a second rubber composition identical to the rubber composition but for the second rubber composition having no 1,3-phenylene dimaleimide.

3. The barrier layer of claim 1, wherein the halogenated butyl rubber is selected from one or more of a chlorobutyl rubber or a bromobutyl rubber.

4. The barrier layer of claim 3, wherein the cross-linkable elastomer composition comprises 100 phr of the one or more of the chlorobutyl rubber or the bromobutyl rubber.

5. The barrier layer of claim 1, wherein the halogenated polymeric rubber is a halogenated poly(isobutylene-co-p-methylstyrene).

6. The barrier layer of claim 5, wherein the halogenated poly(isobutylene-co-p-methylstyrene) is a terpolymer of isobutylene, para-methylstyrene and brominated para-methylstyrene.

7. The barrier layer of claim 6, wherein the cross-linkable rub elastomer composition comprises 100 phr of the terpolymer.

8. The barrier layer of claim 1, wherein the secondary diene elastomer is selected from at least one of polybutadiene rubber, nitrile rubber, polyisoprene rubber, poly(styrene-co-butadiene) rubber, poly(isoprene-co-butadiene) rubber, styrene-isoprene-butadiene rubber, ethylene-propylene rubber, halogenated isoprene, halogenated isobutylene copolymers, polychloroprene or star-branched polyisobutylene rubber.

9. The barrier layer of claim 1, wherein the secondary diene elastomer is natural rubber.

10. The barrier layer of claim 1, wherein the cross-linkable elastomer composition comprises between 70 phr and 100 phr of the primary elastomer.

11. The barrier layer of claim 1, wherein the cross-linkable elastomer composition comprises between 0.25 phr and 3 phr of the BMI.

12. The barrier layer of claim 1, wherein the platy filler is an organo-modified platy filer.

13. The barrier layer of claim 12, wherein the platy filler is an organoclay.

14. The barrier layer of claim 1, wherein the cross-linkable elastomer composition comprises between 1 phr and 15 phr of the platy filler.

15. The barrier layer of any one of the preceding claims, wherein the barrier layer is an inner tube adapted for a pneumatic tire.

16. The barrier layer of any one of claims 1 through 14, wherein the barrier layer is integrated with a pneumatic tire.

**Patentansprüche**

1. Sperrschicht zum Verhindern der Strömung von Aufblasgas durch einen aufblasbaren Gegenstand, wobei die Sperrschicht aus einer Kautschukzusammensetzung hergestellt ist, die auf einer vernetzbaren Elastomerzusammensetzung basiert, wobei die vernetzbare Elastomerzusammensetzung pro 100 Gewichtsteile Kautschuk (phr) Folgendes umfasst:

   mindestens 50 phr eines primären Elastomers, das aus mindestens einem von einem halogenierten Butylkautschuk oder einem polymeren halogenierten Kautschuk ausgewählt ist, der von $C_4$- bis $C_7$-Isoolefin hergeleitete Einheiten, von para-Alkylstyrol hergeleitete Einheiten und von para-Halogenalkylstyrol hergeleitete Einheiten umfasst;
   zwischen 0 phr und 50 phr eines sekundären Dienelastomers;
   einen plättchenförmigen Füllstoff;
   mindestens 0,1 phr von 1,3-Phenylendimaleinimid, das der vernetzbaren Elastomerzusammensetzung im nicht-produktiven Stadium der Verarbeitung der Kautschukzusammensetzung zugesetzt wird; und
   ein Schwefelhärtungssystem, das Schwefel und einen Beschleuniger aufweist,
   wobei das 1,3-Phenylendimaleinimid in dem Schwefelhärtungssystem nicht enthalten ist.

2. Sperrschicht nach Anspruch 1, wobei die Kautschukzusammensetzung mindestens eine 5-prozentige Verringerung der Durchlässigkeit gemessen nach ASTM D3985 bei 40°C gegenüber einer mit der Kautschukzusammensetzung identischen zweiten Kautschukzusammensetzung bereitstellt, wobei die zweite Kautschukzusammensetzung jedoch kein 1,3-Phenylendimaleinimid enthält.

3. Sperrschicht nach Anspruch 1, wobei der halogenierte Butylkautschuk aus einem oder mehreren von einem Chlorbutylkautschuk oder einem Brombutylkautschuk ausgewählt ist.

4. Sperrschicht nach Anspruch 3, wobei die vernetzbare Elastomerzusammensetzung 100 phr des einen oder der mehreren von dem Chlorbutylkautschuk oder dem Brombutylkautschuk umfasst.

5. Sperrschicht nach Anspruch 1, wobei es sich bei dem halogenierten polymeren Kautschuk um ein halogeniertes Poly(isobutylen-co-p-methylstyrol) handelt.

6. Sperrschicht nach Anspruch 5, wobei es sich bei dem halogenierten Poly(isobutylen-co-p-methylstyrol) um ein Terpolymer von Isobutylen, para-Methylstyrol und bromiertem para-Methylstyrol handelt.

7. Sperrschicht nach Anspruch 6, wobei die vernetzbare Elastomerzusammensetzung 100 phr des Terpolymers umfasst.

8. Sperrschicht nach Anspruch 1, wobei das sekundäre Dienelastomer aus mindestens einem von Polybutadienkautschuk, Nitrilkautschuk, Polyisoprenkautschuk, Poly(styrol-co-butadien)-Kautschuk, Poly(isopren-co-butadien)-Kautschuk, Styrol-Isopren-Butadien-Kautschuk, Ethylen-Propylen-Kautschuk, halogeniertem Isopren, halogenierten Isobutylencopolymeren, Polychloropren oder sternförmig verzweigtem Polyisobutylenkautschuk ausgewählt ist.

9. Sperrschicht nach Anspruch 1, wobei es sich bei dem sekundären Dienelastomer um Naturkautschuk handelt.

10. Sperrschicht nach Anspruch 1, wobei die vernetzbare Elastomerzusammensetzung zwischen 70 phr und 100 phr des primären Elastomers umfasst.

11. Sperrschicht nach Anspruch 1, wobei die vernetzbare Elastomerzusammensetzung zwischen 0,25 phr und 3 phr des BMI umfasst.

12. Sperrschicht nach Anspruch 1, wobei es sich bei dem plättchenförmigen Füllstoff um einen organomodifizierten plättchenförmigen Füllstoff handelt.

13. Sperrschicht nach Anspruch 12, wobei es sich bei dem plättchenförmigen Füllstoff um Organoton handelt.

14. Sperrschicht nach Anspruch 1, wobei die vernetzbare Elastomerzusammensetzung zwischen 1 phr und 15 phr des plättchenförmigen Füllstoffs umfasst.

**15.** Sperrschicht nach einem der vorhergehenden Ansprüche, wobei es sich bei der Sperrschicht um einen für einen Luftreifen geeigneten Innenschlauch handelt.

**16.** Sperrschicht nach einem der Ansprüche 1 bis 14, wobei die Sperrschicht in einen Luftreifen integriert ist.

**Revendications**

**1.** Couche barrière pour empêcher un gaz de gonflage de passer à travers un article gonflable, laquelle couche barrière est constituée d'une composition de caoutchouc qui est à base d'une composition d'élastomère réticulable, laquelle composition d'élastomère réticulable comprend, pour 100 parties en poids de caoutchouc (pcpc) :

- au moins 50 pcpc d'un élastomère primaire choisi comme étant au moins l'un d'un caoutchouc butyl halogéné et d'un caoutchouc polymère halogéné comprenant des motifs dérivés d'iso-oléfine en $C_4$-$C_7$, des motifs dérivés de para-alkyl-styrène et des motifs dérivés de para-(halogéno-alkyl)-styrène,
- entre 0 et 50 pcpc d'un élastomère secondaire, de diène,
- une charge à structure feuilletée,
- au moins 0,1 pcpc de 1,3-phénylène-dimaléimide, ajouté à la composition d'élastomère réticulable au stade non-productif du traitement de la composition de caoutchouc,
- et un système durcisseur à base de soufre, comportant du soufre et un accélérateur,

étant entendu que le 1,3-phénylène-dimaléimide n'est pas inclus dans le système durcisseur à base de soufre.

**2.** Couche barrière conforme à la revendication 1, dans laquelle la composition de caoutchouc fait diminuer d'au moins 5 % la perméabilité, mesurée selon la norme ASTM D3985 à 40 °C, par rapport à une seconde composition de caoutchouc, identique à la composition de caoutchouc excepté que cette seconde composition de caoutchouc ne contient pas de 1,3-phénylène-dimaléimide.

**3.** Couche barrière conforme à la revendication 1, pour laquelle le caoutchouc butyl halogéné est choisi comme étant l'un ou plusieurs d'un caoutchouc chlorobutyl et d'un caoutchouc bromobutyl.

**4.** Couche barrière conforme à la revendication 3, dans laquelle la composition d'élastomère réticulable comprend 100 pcpc de l'un ou plusieurs du caoutchouc chlorobutyl et du caoutchouc bromobutyl.

**5.** Couche barrière conforme à la revendication 1, dans laquelle le caoutchouc polymère halogéné est un poly(isobutylène-co-para-méthyl-styrène) halogéné.

**6.** Couche barrière conforme à la revendication 5, dans laquelle le poly(isobutylène-co-para-méthyl-styrène) halogéné est un terpolymère d'isobutylène, de para-méthyl-styrène et de para-méthyl-styrène bromé.

**7.** Couche barrière conforme à la revendication 6, dans laquelle la composition d'élastomère réticulable comprend 100 pcpc du terpolymère.

**8.** Couche barrière conforme à la revendication 1, dans laquelle l'élastomère secondaire de diène est choisi, au nombre d'au moins un, parmi les suivants : caoutchouc polybutadiène, caoutchouc nitrile, caoutchouc polyisoprène, caoutchouc poly(styrène-co-butadiène), caoutchouc poly(isoprène-co-butadiène), caoutchouc de styrène-isoprène-butadiène, caoutchouc d'éthylène-propylène, copolymères d'isoprène halogéné ou d'isobutylène halogéné, polychloroprène, et caoutchouc polyisobutylène ramifié en étoile.

**9.** Couche barrière conforme à la revendication 1, dans laquelle l'élastomère secondaire de diène est du caoutchouc naturel.

**10.** Couche barrière conforme à la revendication 1, dans laquelle la composition d'élastomère réticulable comprend entre 70 et 100 pcpc de l'élastomère primaire.

**11.** Couche barrière conforme à la revendication 1, dans laquelle la composition d'élastomère réticulable comprend entre 0.25 et 3 pcpc de BMI (1,3-phénylène-dimaléimide).

12. Couche barrière conforme à la revendication 1, dans laquelle la charge à structure feuilletée est une charge à structure feuilletée et à modification organique.

13. Couche barrière conforme à la revendication 12, dans laquelle la charge à structure feuilletée est une organo-argile.

14. Couche barrière conforme à la revendication 1, dans laquelle la composition d'élastomère réticulable comprend entre 1 et 15 pcpc de charge à structure feuilletée.

15. Couche barrière conforme à l'une des revendications précédentes, laquelle couche barrière est une chambre à air adaptée pour pneumatique.

16. Couche barrière conforme à l'une des revendications 1 à 14, laquelle couche barrière est intégrée à un pneumatique.

*FIG. 1*

*FIG. 2*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20100210779 A